# EUROPÄISCHE PATENTSCHRIFT

(11) **EP 0 788 895 B1**
(45) Veröffentlichungstag und Bekanntmachung des Hinweises auf die Patenterteilung: **10.01.2001**
(21) Anmeldenummer: 96250184.7
(22) Anmeldetag: 29.08.1996
(51) Int. Cl.: B60B 3/08, B60B 3/04

(54) **Leichtmetall-Bandrad**
Wheel of light metal
Roue de métal léger

(30) Priorität: 06.09.1995 DE 19534522
(43) Veröffentlichungstag der Anmeldung: 13.08.1997
(73) Patentinhaber: Michelin Kronprinz Werke GmbH, 42697 Solingen (DE); VAW Aluminium AG, 53117 Bonn (DE)
(72) Erfinder: Bönning, Meinhard, Dipl.-Ing., 42697 Solingen (DE); Duning, Ralf, Dipl.-Ing., 42791 Solingen (DE); Gohrbandt, Uwe, Dr.-Ing., 42781 Haan (DE); Söllner, Gerhard, Dipl.-Ing., 53757 St. Augustin (DE)
(74) Vertreter: Meissner, Peter E., Dipl.-Ing.

(56) Entgegenhaltungen:
- EP-A- 0 004 679
- DE-A- 2 423 181
- DE-A- 3 016 285
- DE-A- 3 328 135
- FR-A- 2 479 715

## Beschreibung

Die Erfindung betrifft ein Leichtmetall-Bandrad, insbesondere für Kraftfahrzeuge, gemäß dem Gattungsbegriff des Hauptanspruches.

Ein gattungsmäßiges Leichtmetall-Bandrad ist aus der DE-A 33 28 135 bekannt. Dieses Bandrad setzt sich zwecks Vermeidung von Schweißverbindungen aus mehreren formschlüssig verbundenen Blechformteilen unter Bildung einer Felge mit Felgenhörnern und einer Radschüssel zusammen. Die Randbereiche der Radschüssel sind durch Umbördelungen in den Felgenhörnern gehalten. Diese Konstruktion hat der Nachteil, daß sie nicht genügend Steifigkeit aufweist und deshalb nur für mittlere Belastungen auslegbar ist. Außerdem ist durch die Umbördelung eine Vielzahl von Umformschritten erforderlich.

Ein ähnlich gestaltestes Fahrzeugrad zeigt die DE-A 24 23 181. Dieses Fahrzeugrad weist eine doppelwandige Radschüssel und eine mit ihr verbundene Flachbettfelge auf, wobei die beiden Radschüsselwände miteinander verbunden sind und der innere Felgenteil von der einen Wand und der äußere Felgenteil von der anderen Wand gebildet ist. Die doppelwandige Radschüssel ist mit Belüftungslöchern versehen und die beiden Radteile sind durch Lochnietung an den Belüftungslöchern miteinander verbunden.

Aufgabe der Erfindung ist es, ein verbessertes Leichtmetall-Bandrad anzugeben, das bei niedrigem Eigengewicht eine hohe Steifigkeit aufweist und vereinfacht herstellbar ist.

Diese Aufgabe wird mit den im kennzeichnenden Teil des Anspruches 1 angegebenen Merkmalen gelöst. Weiterhin wird ein Verfahren zur Herstellung eines solchen Leichtmetall-Bandrades Vorteilhafte Weiterbildungen sind Bestandteil von Unteransprüchen.

Erfindungsgemäß weist die mit der Felge stoffschlüssig verbundene Radschüssel zwei Radschüsselteile mit Belüftungslöchern auf. Beispielsweise kann als stoffschlüssige Verbindung ein Verschweißen von Radschüssel und Felge gewählt werden. Die Belüftungslöcher sind mit zur Radinnenseite sich erstreckenden und ineinander verpreßbaren Aushalsungen versehen. Im Montagezustand weisen im Bereich der Belüftungslöcher die beiden Radschüsselteile einen Abstand zueinander auf, während sie im Nabenbereich zur Anlage kommen.

Diese Konstruktion hat den Vorteil, daß das Leichtmetallrad eine große Steifigkeit aufweist und auch für die Übertragung größerer Lasten geeignet ist. Darüber hinaus ist es leichter als übliche Leichtmetallräder, da die Blechdicke der beiden Radschüsselteile gering gewählt werden kann.

Neben der Klebetechnik gibt es die Möglichkeit durch Umbördeln der Aushalsung eines der beiden Radschüsselteile die Radschüsselteile zusätzlich formschlüssig miteinander zu verbinden. Zur Übertragung großer Kräfte im Befestigungsbereich weisen die Befestigungslöcher eine nach außen gerichtete Verprägung auf. Üblicherweise wird bei diesem Vorgang das Achsführungsloch mit ausgestanzt. Die Aushärtung des eingebrachten Klebemittels erfolgt vorzugsweise im Rahmen der Einbrennlackierung.

Alternativ ist es auch möglich statt Schweißen oder Kleben unter Verwendung teilweise lotplattierter Ausgangswerkstoffe ein Löten als Verbindungstechnik zu wählen. Dabei kann das Löten sowie das Einbrennlackieren im Rahmen einer Gesamtwärmebehandlung durchgeführt werden. Durch diese Maßnahme wird die Festigkeit des verwendeten Werkstoffes angehoben.

In der Zeichnung wird anhand zweier Ausführungsbeispiele das erfindungsgemäße Leichtmetall-Bandrad näher erläutert.
Es zeigen:
- Figur 1a,b: einen halbseitigen Querschnitt durch die beiden Radschüsselteile vor der Montage
- Figur 2: wie Figur 1, jedoch nach der Montage
- Figur 3: wie Figur 2, jedoch mit Befestigungslöchern und Achsführungsloch.
- Figur 4: das vollständige Rad mit Radschüssel und Felge
- Figur 5a,b: wie Figur 1a,b, jedoch eine andere Ausführungsform
- Figur 6: wie Figur 5, jedoch nach der Montage.

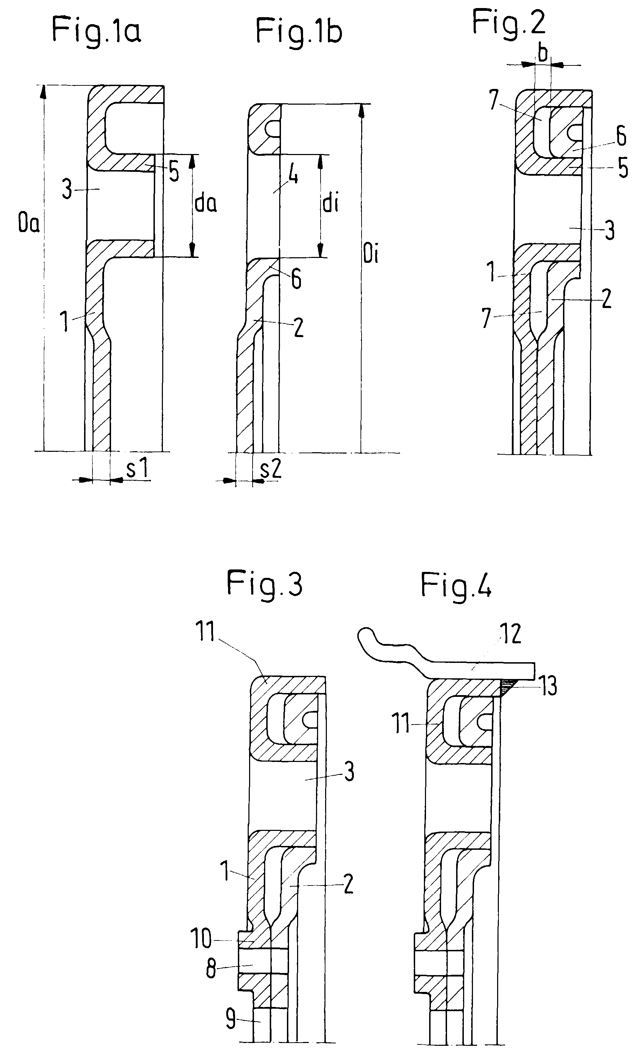

In Figur 1 a,b sind in einem halbseitigen Querschnitt die beiden Radschüsselteile 1,2 vor der Montage dargestellt. Beide Radschüsselteile 1,2 sind in mehreren Stufen über eine Presse aus einem Leichtmetallband vorzugsweise Aluminium gefertigt. Sie weisen Belüftungslöcher 3,4 auf, die mit einer nach innen sich erstreckenden Aushalsung 5,6 versehen sind. Damit die beiden Radschüsselteile 1,2 zu einer Radschüssel gepreßt werden können, ist der äußere Durchmesser "da" der Aushalsung 5 des hier links liegenden Radschüsselteiles 1 höchstens gleich oder kleiner als der Innendurchmesser "di" der Aushalsung 6 des hier rechts liegenden Radschüsselteiles 2.

Figur 2 zeigt die fertige Radschüssel nach der Montage. Wesentlich dabei ist, daß im Bereich der Belüftungslöcher 3 zwischen den beiden Radschüsselteilen 1,2 ein Abstand 7 verbleibt, während im Nabenbereich die beiden Radschüsselteile 1,2 zur Anlage kommen. Der verbleibende Abstand 7 trägt wesentlich zur Steifigkeit des Rades bei, so daß mit diesem Rad größere Lasten übertragen werden können.

Figur 3 zeigt die vollständige Radschüssel 11 nach Anbringung der Befestigungslöcher 8 und des Achsführungsloches 9. Um die hohen Flächenpressungen im Bereich der Befestigungslöcher 8 besser aufnehmen zu können, weisen nach dem Ausstanzen die Befestigungslöcher 8 eine nach außen sich erstreckende Verprägung 10 auf.

Figur 4 zeigt das fertige Rad, wobei die Radschüssel 11 mit der Felge 12 stoffschlüssig über eine Schweißnaht 13 verbunden ist.

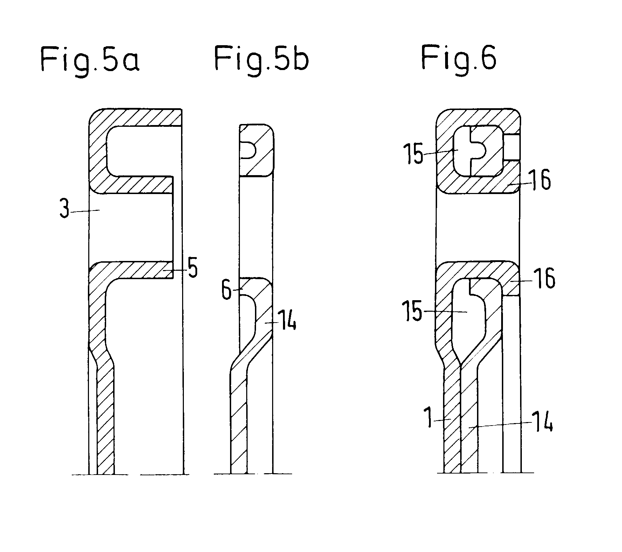

Figur 5a,b zeigt eine andere Ausführungsform des innenliegenden Radschüsselteiles 14. Im Unterschied zu Figur 1b stehen sich die Aushalsungen 5,6 einander gegenüber und der Nabenbereich des innenliegenden Radschüsselteiles 14 erstreckt sich mehr nach außen. Nach der Montage (Fig. 6) weisen wie bei der zuvor erläuterten Ausführungsvariante die beiden Radschüsselteile 1,14 einen Abstand 15 auf. Um die Verklammerung der beiden Radschüsselteile 1,14 noch zu verbessern, ist der Endbereich 16 der Aushalsung 5 des links liegenden Radschüsselteiles 1 umgebördelt, so daß ein formschlüssiger Verbund entsteht. Die weiteren Verfahrensschritte wie Ausstanzen und Verprägen der Befestigungslöcher sowie die Anbringung des Achsführungsloches sind hier weggelassen worden, da sie nur eine Wiederholung der Darstellung gemäß Figur 3 wären. Das gilt in gleicher Weise auch für die das Verbinden der Felge mit der Radschüssel.

## Patentansprüche

1. Leichtmetall-Bandrad, insbesondere für Kraftfahrzeuge, das aus mehreren Blechformteilen unter Bildung einer Felge (12) mit Felgenhörnern und einer Radschüssel zusammengesetzt ist und das im Nabenbereich Befestigungslöcher (8) und ein Achsführungsloch (9) aufweist, wobei die einteilige Felge (12) mit der Radschüssel stoffschlüssig verbunden ist und die Radschüssel zwei mit Belüftungslöchern (3, 4) versehene Radschüsselteil (1, 2) aufweist,
dadurch gekennzeichnet,
daß die Belüftungslöcher (3,4) mit zur Radinnenseite sich erstreckenden und ineinander verpreßbaren Aushalsungen (5, 6) versehen sind und nach dem Verbinden der beiden Radschüsselteile (1, 2) in dem die Belüftungslöcher umschließenden Bereich die beiden Radschüsselteile (1, 2) einen Abstand zueinander aufweisen, während sie im Nabenbereich zur Anlage kommen.

2. Leichtmetall-Bandrad nach Anspruch 1,
dadurch gekennzeichnet,
daß die Enden der Aushalsungen der Belüftungslöcher des einen Radschüsselteiles für das andere Radschüsselteil umgreifende Umbördelungen aufweist.

3. Leichtmetall-Bandrad nach den Ansprüchen 1 und 2,
dadurch gekennzeichnet,
daß die Befestigungslöcher eine nach außen gerichtete Verprägung aufweisen.

4. Leichtmetall-Bandrad nach den Ansprüchen 1 bis 3,
dadurch gekennzeichnet,
daß für die Felge und das Radschüsselinnenteil ein einseitig plattiertes und für das Radschüsselaußenteil ein unplattiertes AlMgSi-Band verwendet wird.

5. Leichtmetall-Bandrad nach den Ansprüchen 1 bis 3,
dadurch gekennzeichnet,
daß für das Radschüsselaußenteil ein beidseitig und für die Felge und das Radschüsselinnenteil ein unplattiertes AlMgSi-Band verwendet wird.

6. Leichtmetall-Bandrad nach Anspruch 4 oder 5,
dadurch gekennzeichnet,
daß die Plattierung vorzugsweise aus X AlSi10 besteht.

7. Verfahren zur Herstellung eines Leichtmetall-Bandrades, insbesondere für Kraftfahrzeuge, gemäß Anspruch 1,
dadurch gekennzeichnet,
daß die zwei Radschüsselteile (1, 2) mit entsprechenden Belüftungsöffnungen auf einer Stufenpresse in mehreren Zügen hergestellt werden und anschließend im Bereich der Aushalsung die beiden Radschüsselteile konisch zueinander gepreßt werden und durch Nachzug ein Preßsitz im Bereich der Aushalsung entsteht, wobei dabei im Bereich der Nabe die beiden Radschüsselteile zur Anlage kommen und danach die Befestigungslöcher ausgestanzt, verprägt werden und das Achsführungsloch mit ausgestanzt wird und die Radschüssel in das Felgenbett eingepreßt und mit dieser stoffschlüssig verbunden wird und abschließend eine Lackeinbrennung der Oberfläche des gesamten Rades erfolgt.

8. Verfahren nach Anspruch 7,
dadurch gekennzeichnet,
daß im Bereich des Preßsitzes vor der Verpressung Klebstoff aufgebracht wird.

9. Verfahren nach Anspruch 8,
dadurch gekennzeichnet,
daß die Aushärtung des Klebstoffes während des Lackeinbrennens erfolgt.

10. Verfahren nach Anspruch 7,
dadurch gekennzeichnet,
daß nach dem Zusammenbau der Radschüsselteile und der Felge unter Verwendung teilweise lotplattierter Ausgangswerkstoffe das gesamte Rad in einem Vakuumofen gelötet wird.

11. Verfahren nach Anspruch 10,
dadurch gekennzeichnet,
daß der Lötvorgang mit nachfolgender rascher Abkühlung und anschließender Einbrennlackierung als Gesamtwärmebehandlung ausgelegt ist.

12. Verfahren nach einem der Ansprüche 7 bis 11,
dadurch gekennzeichnet,
daß nach dem Ineinanderpressen der beiden Radschüsselteile die Enden der Aushalsung eines der beiden Radschüsselteile umgebördelt werden.

13. Verfahren nach einem der Ansprüche 7 bis 12,
dadurch gekennzeichnet,
daß die Sichtfläche des Rades durch Kugelstrahlen bearbeitet wird.

## Claims

1. Light-metal strip wheel, in particular for motor vehicles, which is composed of a plurality of formed sheet-metal parts to form a rim (12) with rim horns and a wheel dish and which has in the hub region fixing holes (8) and an axle guidance hole (9), wherein the one-piece rim (12) is connected with material locking to the wheel dish and the wheel dish has two wheel dish parts (1, 2) provided with aeration holes (3, 4), characterised in that the aeration holes (3, 4) are provided with projecting necks (5, 6), and after the joining of the two wheel dish parts (1, 2) in the region surrounding the aeration holes the two wheel dish parts (1, 2) have clearance from one another whilst coming into contact in the hub region.

2. Light-metal strip wheel according to claim 1, characterised in that the ends of the projecting necks of the aeration holes of the one wheel dish part have enveloping beading for the other wheel dish part.

3. Light-metal strip wheel according to claims 1 and 2, characterised in that the fixing holes are stamped so as to project outward.

4. Light-metal strip wheel according to claims 1 to 3, characterised in that for the rim and the wheel dish inner part, an AlMgSi strip plated on one side and for the wheel dish outer part an unplated AlMgSi strip is used.

5. Light-metal strip wheel according to claims 1 to 3, characterised in that for the wheel dish outer part an AlMgSi strip plated on both sides and for the rim and the wheel dish inner part an unplated AlMgSi strip is used.

6. Light-metal strip wheel according to claim 4 or 5, characterised in that the plating preferably consists of XAlSi10.

7. Method of manufacturing a light-metal strip wheel, in particular for motor vehicles, according to claim 1, characterised in that the two wheel dish parts (1, 2) are manufactured in a plurality of stages with corresponding aeration apertures on a multiple die press and then in the region of the projecting neck the two wheel dish parts are pressed conically together, and by tightening a press fit is formed in the region of the neck, and then in the region of the hub the two wheel dish parts come into contact, and then the fixing holes are punched and stamped and the axle guidance hole is punched therewith and the wheel dish is pressed into the rim bed and is joined thereto by material locking, and finally the enamel is baked into the surface of the entire wheel.

8. Method according to claim 7, characterised in that adhesive is applied in the region of the press fit before pressing.

9. Method according to claim 8, characterised in that the hardening of the adhesive takes place during enamelling.

10. Method according to claim 7, characterised in that after assembly of the wheel dish parts and the rim, using partially solder-plated starting materials, the entire wheel is soldered in a vacuum furnace.

11. Method according to claim 10, characterised in that the soldering process is arranged as a total heat treatment with subsequent rapid cooling and enamelling.

12. Method according to one of claims 7 to 11, characterised in that after the pressing together of the two wheel dish parts the ends of the projecting neck of one of the two wheel dish parts are beaded.

13. Method according to one of claims 7 to 12, characterised in that the visible surface of the wheel is processed by shot-blasting.

## Revendications

1. Roue en métal léger, en particulier pour des véhicules automobiles, qui est constituée de plusieurs pièces de tôle en formant une jante (12) ayant des bords de jante et une coque de roue et qui présente, dans la zone du moyeu, des trous de fixation (8) et un trou de guidage d'essieu (9), la jante en une pièce (12) étant reliée de matière avec la coque de roue et la coque de roue présentant deux parties (1, 2) de coque de roue munies de trous de ventilation (3, 4),
caractérisée en ce que les trous de ventilation (3, 4) sont munis de collets (5, 6) pouvant être pressés l'un dans l'autre et s'étendant vers le côté interne de la roue et, après la liaison des deux parties (1, 2) de la coque de roue, dans la zone entourant les trous de ventilation, les deux parties (1, 2) de la coque de roue présentent un écartement l'une par rapport à l'autre, tandis qu'elles viennent en appui dans la zone du moyeu.

2. Roue en métal léger selon la revendication 1,
caractérisée en ce que les extrémités des collets des trous de ventilation d'une partie de la coque de roue présentent des bords rabattus enveloppants pour l'autre partie de la coque de roue.

3. Roue en métal léger selon les revendications 1 et 2,
caractérisée en ce que les trous de fixation présentent un estampage orienté vers l'extérieur.

4. Roue en métal léger selon les revendications 1 à 3,
caractérisée en ce que, pour la jante et la partie interne de la coque de roue, il est utilisé un feuillard AIMgSi plaqué d'un côté et, pour la partie externe de la coque de roue, un feuillard AIMgSi non plaqué.

5. Roue en métal léger selon les revendications 1 à 3,
caractérisée en ce que, pour la partie externe de la coque de roue, il est utilisé un feuillard AIMgSi plaqué des deux côtés et, pour la jante et la partie interne de la coque de roue, un feuillard AIMgSi non plaqué.

6. Roue en métal léger selon la revendication 4 ou 5,
caractérisée en ce que le placage est constitué avantageusement de X AISi10.

7. Procédé pour fabriquer une roue en métal léger, en particulier pour des véhicules automobiles, selon la revendication 1,
caractérisé en ce que les deux parties (1, 2) de la coque de roue sont fabriquées avec des ouvertures de ventilation correspondantes sur une presse à étages en plusieurs passes et, ensuite, dans la zone du collet, les deux parties de la coque de roue sont pressées l'une par rapport à l'autre de façon conique et, par une passe finale, il est créé un ajustage serré dans la zone du collet, les deux parties de la coque de roue venant de plus en appui dans la zone du moyeu et, par la suite, les trous de fixation sont poinçonnés, estampés, et le trou de guidage d'essieu est en même temps poinçonné et la coque de roue est pressée dans la base de jante et est reliée de matière avec celle-ci et, finalement, il est effectué un vernissage au vernis à cuire de la surface de la roue en totalité.

8. Procédé selon la revendication 7,
caractérisé en ce que de la colle est appliquée dans la zone de l'ajustage serré avant le pressage.

9. Procédé selon la revendication 8,
caractérisé en ce que le durcissement de la colle est effectué pendant le vernissage au vernis à cuire.

10. Procédé selon la revendication 7,
caractérisé en ce que, après l'assemblage des parties de la coque de roue et de la jante en utilisant des matières de départ partiellement plaquées par brasage, toute la roue est brasée dans un four sous vide.

11. Procédé selon la revendication 10,
caractérisé en ce que le processus de brasage est suivi par un refroidissement rapide et, ensuite, un vernissage au vernis à cuire comme traitement thermique global.

12. Procédé selon une des revendications 7 à 11,
caractérisé en ce que, après le pressage l'une dans l'autre des deux parties de la coque de roue, les extrémités du collet d'une des deux parties de la coque de roue sont rabattues.

13. Procédé selon une des revendications 7 à 12,
caractérisé en ce que la surface visible de la roue est traitée par grenaillage.
